# EUROPÄISCHE PATENTSCHRIFT

(11) **EP 0 685 712 B1**
(45) Veröffentlichungstag und Bekanntmachung des Hinweises auf die Patenterteilung: **10.05.2000**
(21) Anmeldenummer: 95810198.2
(22) Anmeldetag: 23.03.1995
(51) Int. Cl.: G01F 1/00, G01F 1/84

(54) **Massedurchflussaufnehmer nach dem Coriolis-Prinzip**
Mass flow sensor according to the Coriolis principle
Débimètre massique selon le principe de Coriolis

(30) Priorität: 26.05.1994 EP 94108148; 19.09.1994 EP 94114725
(43) Veröffentlichungstag der Anmeldung: 06.12.1995
(73) Patentinhaber: Endress + Hauser Flowtec AG, CH-4153 Reinach BL 1 (CH)
(72) Erfinder: Bitto, Ennio, CH-4147 Äsch (BL) (CH); Fleury, Patrick, CH-2852 Courtételle (JU) (CH); Koudal, Ole, CH-4153 Reinach (BL) (CH); Lorenz, Rainer, D-79540 Lörrach (DE); Eckert, Gerhard, D-79618 Rheinfelden (DE); Wenger, Alfred, Dr., CH-8413 Neftenbach (ZH) (CH)
(74) Vertreter: Morstadt, Volker, Dipl.-Ing.

(56) Entgegenhaltungen:
- EP-A- 0 261 436
- EP-A- 0 263 719
- WO-A-88/08517
- DE-A- 3 724 675
- DE-U- 8 712 331
- FR-A- 2 598 801
- US-A- 4 090 382
- US-A- 5 095 761

## Beschreibung

Die Erfindung betrifft einen Massedurchflußaufnehmer nach dem Coriolis-Prinzip mit zwei geraden, parallelen Meßrohren als von einem zu messenden Fluid durchströmten Schwingkörpern und ein Verfahren zum Herstellen eines solchen Massedurchflußaufnehmers.

In der eigenen US-A 47 93 191 ist ein Massedurchflußaufnehmer nach dem Coriolis-Prinzip beschrieben,
- der in den Verlauf einer von einem zu messenden Fluid durchströmten Rohrleitung eines gegebenen Durchmessers, axial mit ihr fluchtend, einsetzbar ist,
- mit einem Einlaßrohr und einem Auslaßrohr,
   -- die der Verbindung mit der Rohrleitung dienen,
- mit einem Einlaßverteilerstück und einem Auslaßverteilerstück,
- mit einem äußeren Trägerrohr,
   -- dessen jeweiliges Ende am Einlaßrohr bzw. am Auslaßrohr fixiert ist,
- mit jeweils einer ringförmigen Membran,
   -- über die das Einlaßrohr mit dem Einlaßverteilerstück bzw. das Auslaßrohr mit dem Auslaßverteilerstück verbunden ist,
- mit zwei parallelen, geraden, an jeweils beiden Enden im Einlaßverteilerstück bzw. im Auslaßverteilerstück fixierten Meßrohren gleicher lichter Weite und gleicher Wandstärke,
- mit einem Schwingungserreger,
   -- der die Meßrohre zu Resonanzschwingungen anregt, und
- mit zwei entlang der Meßrohre versetzt angeordneten optischen Sensoren für deren Schwingungen.

In der WO-A 88/08517, insb. in Verbindung mit deren Fig. 8, ist ferner ein Massedurchflußaufnehmer nach dem Coriolis-Prinzip beschrieben,
- der in den Verlauf einer von einem zu messenden Fluid durchströmten Rohrleitung eines gegebenen Durchmessers axial mit ihr fluchtend einsetzbar ist,
- mit einem Einlaßrohr und einem Auslaßrohr,
   -- die der Verbindung mit der Rohrleitung dienen,
- mit einem Einlaßverteilerstück und einem Auslaßverteilerstück,
- mit einem äußeren Trägerrohr,
   -- dessen jeweiliges Ende innenwand-seitig über ein jeweiliges Zwischenstück am Einlaßverteilerstück bzw. Auslaßverteilerstück fixiert ist,
- mit zwei parallelen, geraden, an jeweils beiden Enden im Einlaßverteilerstück bzw. im Auslaßverteilerstück fixierten Meßrohren gleicher lichter Weite und gleicher Wandstärke,
- mit je zwei in der Nähe des Einlaßverteilerstücks bzw. des Auslaßverteilerstücks lediglich die beiden Meßrohre miteinander verbindenden Knotenplatten,
- mit je zwei Schwingungserregern pro Meßrohr,
   -- von denen jeweils ein Paar in gleichem Abstand von der Mitte der Meßrohre an ihnen angeordnet sind,
   -- die die Meßrohre zu entgegengesetzten Resonanzschwingungen in nur einer Schwingungsebene anregen und
   -- von denen das eine Paar entgegengesetzt zum anderen Paar erregt, und
- mit jeweils zwei entlang von jedem Meßrohr versetzt angeordneten elektrodynamischen Sensoren für deren Schwingungen.

In der FR-A 25 98 801 ist schließlich ein Massedurchflußaufnehmer nach dem Coriolis-Prinzip beschrieben,
- der in den Verlauf einer von einem zu messenden Fluid durchströmten Rohrleitung eines gegebenen Durchmessers axial mit ihr fluchtend einsetzbar ist,
- mit einem äußeren Trägerrohr,
- mit einem einzigen, geraden, an jeweils beiden Enden im Trägerrohr fixierten Meßrohr,
- mit zwei Schwingungserregern,
   -- die das Meßrohr zu Resonanzschwingungen in nur einer Schwingungsebene anregen, und
- mit zwei entlang des Meßrohrs versetzt angeordneten elektrodynamischen Sensoren für dessen Schwingungen.

Massedurchflußmesser mit derartigen Massedurchflußaufnehmern haben sich in der Praxis zwar weit mehr als tausendfach bewährt, der auf dem Markt inzwischen herrschende Preiskampf zwingt jedoch dazu, deren Herstellkosten zu reduzieren.

Eine Aufgabe der Erfindung ist es, sowohl Massedurchflußaufnehmer anzugeben, die aufgrund jeweils einfacherer Ausgestaltung unterschiedlicher Teile kostengünstiger hergestellt werden können als die bisher gelieferten, als auch ein dafür geeignetes Herstellverfahren anzugeben.

Die Lösung dieser Aufgabe ist in den unabhängigen Ansprüchen 1 und 9 definiert; Ausgestaltungen sind in den abhängigen Ansprüchen 2 bis 8 angegeben.

Durch den Verzicht auf die beim vorbeschriebenen Massedurchflußaufnehmer der US-A 47 93 191 vorhandene Membran, über die die Schwingungen vom Meßrohr, das durch den einzigen Schwingungserreger zum Oszillieren gebracht wird, auf das andere Meßrohr übertragen werden, wird die bisher jeweils komplizierte räumliche Form des Einlaßverteilerstücks und des Auslaßverteilerstücks wesentlich vereinfacht. Deren Herstellkosten werden somit so drastisch gesenkt, daß der Aufwand für den nunmehr allerdings erforderlichen zweiten Schwingungserreger in Kauf genommen werden kann.

Eine weitere wesentliche Verbilligung ergibt sich durch den Ersatz der vorbeschriebenen optischen Sensoren durch die elektrodynamischen Sensoren.

Ferner können dadurch, daß die beiden Meßrohre mit zwei Paaren von Sensoren und einem Paar Schwingungserreger versehen sind, die jeweiligen Spulen am Trägerrohr fixiert werden, so daß deren Zuleitungen nicht entlang den Meßrohren verlegt zu werden brauchen.

Auch hier wiegt der geringfügige Mehraufwand für den weiteren Schwingungserreger und die beiden weiteren elektrodynamischen Sensoren die Nachteile der Leitungsverlegung und -fixierung entlang der Meßrohre bei weitem auf. Insbesondere entfällt nämlich der Einfluß der Leitungsführung auf die Masse und demzufolge das Schwingungsverhalten der Meßrohre.

Ein weiterer Vorteil der Erfindung ist, daß auf ein eigenes Gehäuse für den Massedurchflußaufnehmer, wie es noch bei dem Massedurchflußaufnehmer nach der eingangs erwähnten US-A 47 93 191 erforderlich war, verzichtet werden kann, da das Trägerrohr selbst als Gehäuse dienen kann.

Die Erfindung wird nun anhand der Figuren der Zeichnung näher erläutert, in der schematisch ein Ausführungsbeispiel dargestellt ist.
- Fig. 1 zeigt: einen axialen Längsschnitt eines Massedurchflußaufnehmers,
- Fig. 2 zeigt: einen axialen Längsschnitt des Massedurchflußaufnehmers der Fig. 1 in einer demgegenüber um 90° gedrehten Ebene,
- Fig. 3 zeigt: eine Querschnittsansicht in situ des prinzipiellen Aufbaus eines Schwingungserregers bzw. eines elektrodynamischen Sensors, und
- Fig. 4 zeigt: perspektivisch-schematisch in teilweise geschnittener Ansicht einen Massedurchflußaufnehmer zusammen mit einem während dessen Herstellung verwendeten Walzwerkzeug.

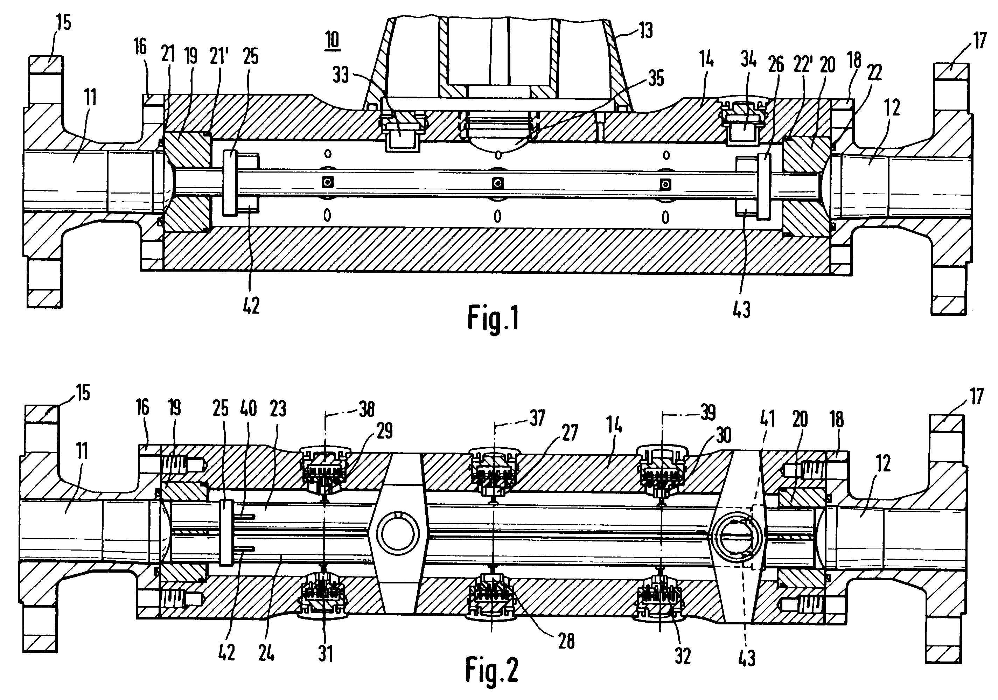

Der in Fig. 1 in Form eines axialen Längsschnitts gezeigte Massedurchflußaufnehmer 10, der in den Verlauf einer von einem zu messenden Fluid durchströmten, aus Übersichtlichkeitsgründen jedoch nicht dargestellten Rohrleitung eines gegebenen Durchmessers, axial mit ihr fluchtend, einsetzbar ist, hat ein Einlaßrohr 11 und ein Auslaßrohr 12, die der Verbindung mit dieser Rohrleitung dienen. Diese Verbindungsmöglichkeit ist z.B. mittels Flanschen 15, 17 oder in anderer Weise möglich.

Einlaßrohr 11 und Auslaßrohr 12 sind ferner über je einen weiteren Flansch 16, 18 stirnseitig an einem massiven äußeren Trägerrohr 14 befestigt, vorzugsweise damit verschraubt, wobei jeweils ein Dichtungsring 21, 22 vorgesehen sein kann. Einlaßrohr 11 bzw. Auslaßrohr 12 bilden zusammen mit den jeweiligen beiden Flanschen 15, 16 bzw. 17, 18 jeweils ein einziges Verbindungsteil, das z.B. ein Schmiedeteil oder aus zwei Teilen zusammengeschweißt sein kann.

Im jeweiligen Ende des Trägerrohrs 14 sind innenwand-seitig ein Einlaßverteilerstück 19 bzw. ein Auslaßverteilerstück 20 fixiert, wobei wiederum jeweils der Dichtungsring 21, 22 vorgesehen sein kann.

Das Einlaßverteilerstück 19 bzw. das Auslaßverteilerstück 20 weist in Achsrichtung des Trägerrohrs 14 zwei parallele Bohrungen auf, in denen das jeweilige Ende von zwei parallelen, geraden Meßrohren 23, 24 gleicher lichter Weite und gleicher Wandstärke einlaß- bzw. auslaßrohrseits-bündig fixiert ist.

In der Nähe des Einlaßverteilerstücks 19 bzw. des Auslaßverteilerstücks 20 ist jeweils eine lediglich die beiden Meßrohre 23, 24 miteinander verbindende Knotenplatte 25, 26 vorgesehen, durch die die in das Einlaßverteilerstück 19 bzw. das Auslaßverteilerstück 20 mündenden Teile der Meßrohre 23, 24 von schwingungsbedingten mechanischen Wechselbeanspruchungen entlastet werden.

Im Trägerrohr 14 sind mehrere Öffnungen vorgesehen, in die einerseits die unten noch zu erläuterenden Schwingungserreger und Sensoren und in die andererseits ein Temperatursensor 33 für die Temperatur des Trägerrohrs selbst und ein Temperatursensor 34 für die Temperatur der Meßrohre und somit des Fluids eingesetzt sind. Schließlich führen durch eine Öffnung 35 elektrische Zuleitungen für die Schwingungserreger und die Sensoren.

Nach einer bevorzugten Ausgestaltung der Erfindung sind die zu jeweils einem Meßrohr gehörenden Sensoren mit dem gleichen Abstand zur Rohrmitte und an dessen vom anderen Meßrohr abgewandten Außenseite auf jeweils einer in der Schwingungsebene verlaufenden Sensorachse angeordnet.

Im oberen Teil der Fig. 1 ist noch der Fuß einer Halterung 13 zu sehen, an der ein nicht gezeigtes Gehäuse für eine Auswerte-, Antriebs- und Anzeige-Elektronik befestigt ist.

In Fig. 2, die einen axialen Längsschnitt des Massedurchflußaufnehmers der Fig. 1 in einer demgegenüber um 90° gedrehten Ebene zeigt, ist in der Mitte jeden Meßrohrs 23, 24 pro Meßrohr je ein Schwingungserreger 27, 28 fixiert. Diese Schwingungserreger versetzen die Meßrohre 23, 24 in entgegengesetzte Resonanzschwingungen, und zwar in nur einer Schwingungsebene, die in Fig. 2 die Zeichenebene ist.

Der jeweilige Schwingungserreger 27, 28 ist mittig bezüglich der Länge jedes Meßrohrs und an deren vom anderen Meßrohr abgewandten Außenseite auf einer in der Schwingungsebene verlaufenden Erregerachse 37 angeordnet, die in Fig. 2 somit in der Zeichenebene verläuft.

Obwohl durch diese Anordnung der Schwingungserreger 27, 28 das Schwingen in der erwähnten Ebene praktisch erzwungen wird und Schwingungen in anderen Ebenen somit nicht auftreten sollten, ist es vorteilhaft, wenn zur Unterdrückung allfällig doch in diesen anderen Ebenen auftretender Schwingungen auf der verteilerstück-abgewandten Seite jeder Knotenplatte 25, 26 pro Meßrohr ein flacher Steg 40, 41; 42, 43 derart angebracht ist, daß er mit der Schwingungsebene einen Winkel bildet und die Achse des jeweiligen Meßrohrs enthält. In Fig. 2 liegen die Stege vorzugsweise senkrecht zur Schwingungsebene.

Entlang von jedem Meßrohr 23, 24 sind jeweils zwei elektrodynamische Sensoren 29, 30; 31, 32 für deren Schwingungen versetzt angeordnet. Vorzugsweise sind die zu jeweils einem Meßrohr 23 bzw. 24 gehörenden Sensoren 29, 30 bzw. 31, 32 mit dem gleichen Abstand zur Rohrmitte und an dessen vom anderen Meßrohr abgewandter Außenseite auf jeweils einer in der Schwingungsebene verlaufenden Sensorachse 38, 39 angeordnet.

Mittels des Paares von Sensoren 29, 31 und des Paares von Sensoren 30, 32 werden bezüglich der Schwingungen der Meßrohre am Ort der Sensoren zwei verschiedene elektrische Signale erzeugt, aus deren Phasendifferenz in der erwähnten Auswerte-, Antriebs- und Anzeige-Elektronik der Massedurchfluß ermittelt werden kann.

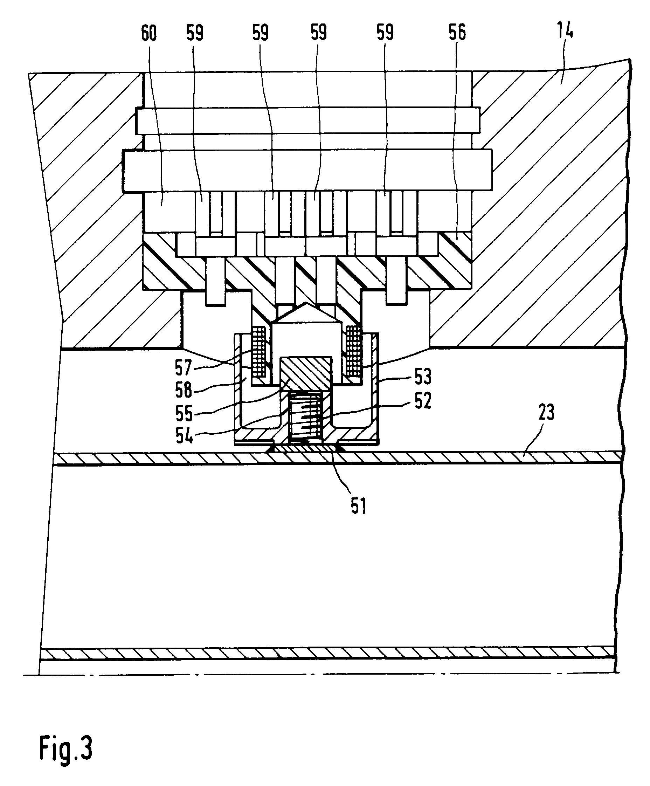

In Fig. 3 ist anhand einer Querschnittsansicht in situ ein Schwingungserreger bzw. ein elektrodynamischer Sensor zu sehen. Eine in Fig. 3 mit dem Meßrohr 23 verlötete nichtferromagnetische Metallplatte 51 mit ebensolchem Gewindestutzen 52, trägt einen weich-ferromagnetischen Metallbecher 53, dessen Boden auf der Innenseite zentral in eine Gewindehülse 54 übergeht, in die der Gewindestutzen eingeschraubt ist. Das andere Meßrohr 24 ist nicht dargestellt, jedoch spiegelbildlich zur unteren waagrechten Mittellinie zu denken.

Eine Dauermagnetscheibe 55, die in Achsrichtung der Gewindehülse 54 magnetisiert ist, ist auf deren Endfläche befestigt, insb. aufgeklebt. Somit befindet sich in Fig. 3 der eine Magnetpol am oberen Ende der Dauermagnetscheibe 55.

Am Trägerrohr 14 ist mittels eines Spulenhalters 56 eine Spule 57 befestigt, in der die Dauermagnetscheibe 55 sich frei bewegen kann, wenn das Meßrohr schwingt. Der Spulenhalter 56 ist ein entsprechend geformtes Kunststoffteil mit eingeformten Durchführungen 59 für den jeweiligen Anschluß der Drähte der Spule 57 und in eine entsprechende Bohrung 60 des Trägerrohrs 14 eingesetzt.

Somit ist die Spule 57 ortsfest am Trägerrohr 14 fixiert, und deren Zuleitungen haben keinerlei mechanische Berührungspunkte oder mechanische Verbindungen mit den schwingenden Meßrohren 23, 24. Dies gilt natürlich auch für die Spulen der in Fig. 3 nicht gezeigten weiteren fünf elektrodynamischen Systeme.

Für Massedurchflußmesser, die in Rohrleitungen mit Nennweiten bis zu etwa 25 mm eingesetzt werden, ist es besonders vorteilhaft, wenn die Massedurchflußaufnehmer nach der Erfindung mit zwei Schwingungserregern und vier elektrodynamischen Sensoren ausgerüstet werden, deren Abmessungen und elektrische Werte (Induktivität und Ohmscher Widerstand der Spulen etc.) untereinander möglichst identisch sind.

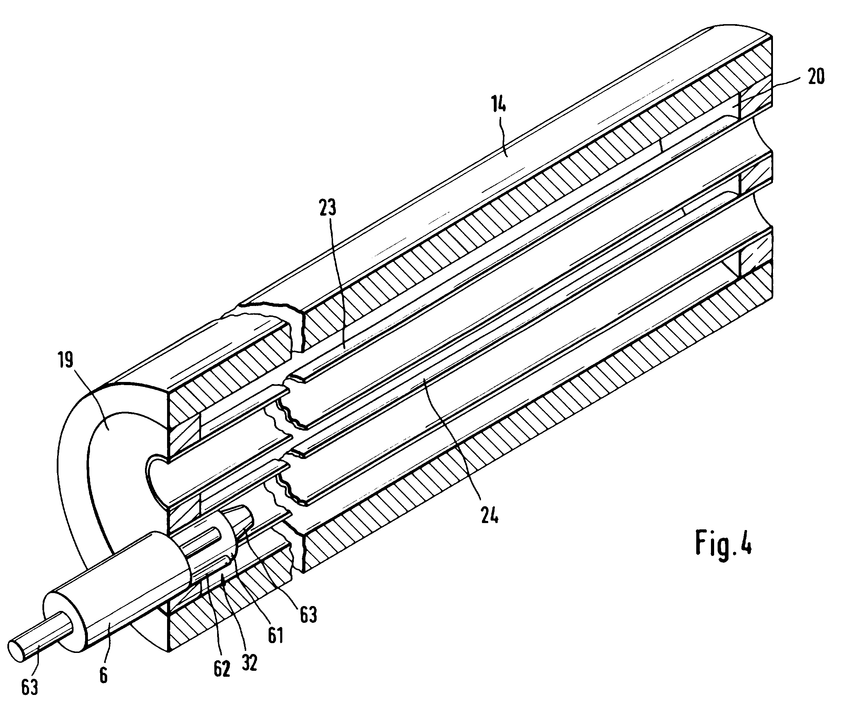

In Fig. 4 ist schließlich perspektivisch-schematisch in teilweise geschnittener Ansicht ein Massedurchflußaufnehmer zusammen mit einem während dessen Herstellung verwendeten Walzwerkzeug 6 gezeigt. Es sind der Übersichtlichkeit halber für die Erläuterung der Fig. 4 unwesentliche Teile nicht (mehr) dargestellt.

Nachdem während des Herstellens die beiden Meßrohre 23, 24 in das Einlaß- bzw. in das Auslaßverteilerstück 19, 20 eingesteckt worden sind, wird ein Walzwerkzeug 6 in das Lumen des Endes des jeweiligen Meßrohrs eingebracht. Am in Einbringrichtung vorderen Ende trägt das Walzwerkzeug 6 einen Käfig 61 mit auf dessen kreisförmige Mantelfläche verteilten und in entsprechende Öffnungen eingesetzten Rollen 62. Ein solches Walzwerkzeug zum Befestigen von Rohren von Boilern oder Wärmetauschern ist z.B. in der US-A 40 90 382 beschrieben.

Der Mittelpunktskreis, auf dem die Rollen 62 sich beim Drehen des Walzwerkzeug 6 bewegen, hat einen Radius, der mittels eines in Einbringrichtung verschiebbaren Stempels 63 verstellt werden kann. Durch Vergrößern dieses Radius im Vergleich zu demjenigen Radius, mit dem das Walzwerkzeug 6 in das Lumen der Meßrohre 23, 24 zunächst eingeführt wird, wird deren jeweiliges Ende mit der Innenwand der Bohrungen des Einlaß- bzw. des Auslaßverteilerstücks 19, 20 verpreßt. Dies geschieht ohne jegliche Energiezufuhr, insb. ohne Wärmezufuhr. Dadurch kommt es zu einem geringfügigen Fließen des Materials der Meßrohre 23, 24 und damit an diesen Stellen zu einer sehr festen mechanischen Verbindung.

Ferner kommt es zu einem geringfügigen Dünnerwerden der Wandstärke der Enden der Meßrohre 23, 24 und somit einerseits zu einer mechanischen Druckpannung in Längsrichtung des jeweiligen Meßrohrs, im folgenden kurz Axialspannung genannt, da die Meßrohre an sich, nämlich ohne Einspannung im Trägerrohr 14, geringfügig länger werden würden. Andererseits kommt es auch innerhalb der jeweiligen Bohrung zu einer mechanischen Druckspannung in Radialrichtung, im folgenden kurz Radialspannung genannt.

Die Radialspannung ist darauf zurückzuführen, daß während des Verpressens die Enden der Meßrohre 23, 24 plastisch verformt werden, dagegen das Einlaß- bzw. das Auslaßverteilerstück 19, 20 wegen seiner gegenüber den Enden größeren Dicke im wesentlichen nur elastisch verformt wird und daß daher das Einlaß- bzw. das Auslaßverteilerstück nach dem Verpressen eine zum Zentrum der Enden gerichtete Radialkraft ausübt.

Die Radialspannung ist nun in erster Linie der Grund dafür, daß eine hinderliche Spannungsriß-Korrosion praktisch vermieden werden kann, die bei den Massedurchflußmessern des Standes der Technik immer auftritt, da die Enden von deren Meßrohren in das Einlaß- bzw. das Auslaßverteilerstück weich- oder harteingelötet oder eingeschweißt sind. Die Axialspannung trägt ebenfalls, allerdings in gegenüber der Radialspannung weit geringerem Maße, zu der Vermeidung Spannungsriß-Korrosion bei.

Es war für die Erfinder überraschend, daß das geschilderte Verpressen, das bisher nur bei nichtbewegten, insb. bei nicht in Schwingungen versetzten Rohren, nämlich bei ruhenden Rohren von Boilern oder Wärmetauschern, üblich war, besonders erfolgreich bei Meßrohren von Massedurchflußaufnehmern, die im Betriebszustand ja schwingen, angewendet werden kann und daß dadurch die obigen Nachteile des Verlötens bzw. des Verschweißens vermieden werden können.

Das eben erläuterte Verpressen kann besonders vorteilhaft auch zum dynamischen, optimalen Ausbalancieren der beiden Meßrohre dienen. Dies sei am Beispiel des in den Fig. 1 bis 4 gezeigten Massedurchflußaufnehmers noch näher erläutert.

Zunächst werden das Einlaß- bzw. Auslaßverteilerstück 19, 20 im Trägerrohr 14 fixiert; es ist auch möglich, Trägerrohr und Einlaß- bzw. Auslaßverteilerstück aus einem Stück herzustellen. Dann werden die Enden der Meßrohre 23, 24 in den zugehörigen Bohrungen des Einlaß- bzw. des Auslaßverteilerstücks 19, 20 positioniert und darin mittels des Walzwerkzeugs 6 durch dessen Drehung auf der gesamten Länge dieser Bohrungen jeweils vorverpreßt; es wird also noch nicht der endgültige, gesamte Preßdruck angewandt.

Dann wird das Ende des einen Meßrohrs 23 im Einlaßverteilerstück 19 mittels des Walzwerkzeugs 6 auf der gesamten Länge der Bohrung endgültig, also mit dem vorgesehenen Preßdruck, verpreßt. Anschließend wird mittels des Walzwerkzeugs 6 das Ende des anderen Meßrohrs 24 im Einlaßverteilerstück 19 allerdings nur solange verpreßt, bis beide Meßrohre dynamisch optimal ausbalanciert sind, d.h. der Stempel 63 des Walzwerkzeugs 6 wird solange unter gleichzeitiger Drehung bewegt, bis die Balance erreicht ist.

Schließlich wird das z.B. zum einen Meßrohr 23 gehörende, bereits vorverpreßte Ende in der Bohrung des Auslaßverteilerstücks 20 endgültig, also mit dem vorgesehenen Preßdruck, verpreßt. Dann wird das zum anderen Meßrohr 24 gehörende, bereits vorverpreßte Ende mittels des Walzwerkzeugs 6 solange weiter verpreßt, bis die beiden Meßrohre dynamisch optimal ausbalanciert sind.

Zur Ermittlung der optimalen dynamischen Balance wird auf dem Trägerrohr 14 ein Beschleunigungssensor angeordnet. Die Verpressung wird nur solange durchgeführt, bis das Signal dieses Sensors ein Minimum aufweist.

Falls jeweiliges Bohrungsende und jeweiliges Ende des Meßrohrs nach dem Verpressen bündig sein sollen, kann die entsprechende Fläche des Einlaß- bzw. des Auslaßverteilerstücks - das ist beim Einlaßverteilerstück 19 in Fig. 4 dessen zu sehende Vorderfläche - mit einer als Anschlag dienenden Vorrichtung abgedeckt werden oder das jeweilige Meßrohr wird beim Einsetzen nicht ganz bis zum Ende der Bohrung eingeschoben.

## Patentansprüche

1. Massedurchflußaufnehmer (10) nach dem Coriolis-Prinzip,
- der in den Verlauf einer von einem zu messenden Fluid durchströmten Rohrleitung eines gegebenen Durchmessers axial mit ihr fluchtend einsetzbar ist,
- mit einem Einlaßrohr (11) und einem Auslaßrohr (12),
-- die der Verbindung mit der Rohrleitung dienen,
- mit einem Einlaßverteilerstück (19) und einem Auslaßverteilerstück (20),
- mit einem äußeren Trägerrohr (14),
-- dessen jeweiliges Ende innenwand-seitig am Einlaß- bzw. Auslaßverteilerstück und stirnseitig am Einlaßrohr bzw. Auslaßrohr fixiert ist,
- mit zwei parallelen, geraden, an jeweils beiden Enden in parallelen Bohrungen des Einlaßverteilerstücks bzw. in parallelen Bohrungen des Auslaßverteilerstücks fixierten Meßrohren (23, 24) gleicher lichter Weite und gleicher Wandstärke, deren Enden mit dem Einlaß- bzw. Auslaßverteilerstück bündig abschließen,
- mit je einer in der Nähe des Einlaßverteilerstücks bzw. des Auslaßverteilerstücks lediglich die beiden Meßrohre miteinander verbindenden Knotenplatte (25, 26),
- mit je einem Schwingungserreger (27, 28) pro Meßrohr,
-- welche Schwingungserreger
--- mittig bezüglich der jeweiligen Länge der Meßrohre angeordnet sind,
--- einander an der jeweiligen vom anderen Meßrohr abgewandten Außenseite gegenüberliegen und so eingerichtet sind,
--- daß sie die Meßrohre zu entgegengesetzten Resonanzschwingungen in nur einer Schwingungsebene anregen, und
- mit jeweils zwei entlang von jedem Meßrohr versetzt angeordneten, einander an der jeweiligen vom anderen Meßrohr abgewandten Außenseite gegenüberliegenden elektrodynamischen Sensoren (29, 30, 31, 32) für deren Schwingungen.

2. Massedurchflußaufnehmer nach Anspruch 1, bei dem der jeweilige Schwingungserreger mittig bezüglich der Länge der Meßrohre (23, 24) und an deren vom anderen Meßrohr abgewandten Außenseite auf einer in der Schwingungsebene verlaufenden Erregerachse (37) angeordnet ist.

3. Massedurchflußaufnehmer nach Anspruch 1, bei dem die zu jeweils einem Meßrohr gehörenden Sensoren mit dem gleichen Abstand zur Rohrmitte und an dessen vom anderen Meßrohr abgewandten Außenseite auf jeweils einer in der Schwingungsebene verlaufenden Sensorachse (38, 39) angeordnet sind.

4. Massedurchflußaufnehmer nach Anspruch 1, bei dem die beiden Schwingungserreger und die vier Sensoren die folgenden Teile umfassen:
- eine mit dem jeweiligen Meßrohr verlötete nichtferromagnetische Metallplatte (51) mit ebensolchem Gewindestutzen (52),
- einen weich-ferromagnetischen Metallbecher (53), dessen Boden auf der Innenseite zentral in eine Gewindehülse (54) übergeht, in die der Gewindestutzen eingeschraubt ist,
- eine Dauermagnetscheibe (55), die auf der Endfläche der Gewindehülse befestigt, insb. aufgeklebt, ist und die in Achsrichtung der Gewindehülse magnetisiert ist, und
- eine am Trägerrohr mittels eines Spulenhalters (56) derart befestigte Spule (57), daß die Dauermagnetscheibe sich in der Spule frei bewegen kann.

5. Massedurchflußaufnehmer nach Anspruch 4, bei dem die beiden Schwingungserreger und die vier Sensoren jeweils die gleichen Abmessungen haben.

6. Massedurchflußaufnehmer nach Anspruch 1, bei dem auf der verteilerstück-abgewandten Seite jeder Knotenplatte (25, 26) pro Meßrohr zwei flache Stege (40, 41; 42, 43) derart angebracht sind, daß sie in einer zur Schwingungsebene senkrechten Ebene liegen, die die Achse des jeweiligen Meßrohrs enthält.

7. Massedurchflußaufnehmer nach Anspruch 1 oder 6, bei dem die beiden Meßrohre, das Einlaßverteilerstück, das Auslaßverteilerstück, die Knotenplatten sowie gegebenenfalls die Stege aus Titan oder aus einer Titanlegierung oder aus Zirkonium bestehen und bei dem das Einlaßrohr und das Auslaßrohr aus Edelstahl besteht.

8. Massedurchflußaufnehmer nach Anspruch 1, bei dem das jeweilige Ende von mindestens einem der Meßrohre (23, 24) in der jeweiligen Bohrung des Einlaß- bzw. des Auslaßverteilerstücks (19, 20) mit der Innenwand der Bohrung verpreßt ist.

9. Verfahren zum Herstellen eines nach dem Coriolis-Prinzip arbeitenden Massedurchflußaufnehmers (10),
- der in den Verlauf einer von einem zu messenden Fluid durchströmten Rohrleitung eines gegebenen Durchmessers axial mit ihr fluchtend einsetzbar ist,
- mit einem Einlaßrohr (11) und einem Auslaßrohr (12),
-- die der Verbindung mit der Rohrleitung dienen,
- mit einem Einlaßverteilerstück (19) und einem Auslaßverteilerstück (20),
- mit einem äußeren Trägerrohr (14),
-- dessen jeweiliges Ende innenwand-seitig am Einlaß- bzw. Auslaßverteilerstück und stirnseitig am Einlaßrohr bzw. Auslaßrohr fixiert ist,
- mit zwei parallelen, geraden, an jeweils beiden Enden in parallelen Bohrungen des Einlaßverteilerstücks bzw. in parallelen Bohrungen des Auslaßverteilerstücks verpreßten Meßrohren (23, 24) gleicher lichter Weite und gleicher Wandstärke, deren Enden mit dem Einlaß- bzw. Auslaßverteilerstück bündig abschließen,
- mit je einer in der Nähe des Einlaßverteilerstücks bzw. des Auslaßverteilerstücks lediglich die beiden Meßrohre miteinander verbindenden Knotenplatte (25, 26),
- mit je einem Schwingungserreger (27, 28) pro Meßrohr,
-- welche Schwingungserreger
--- mittig bezüglich der jeweiligen Länge der Meßrohre angeordnet sind,
--- einander an der jeweiligen vom anderen Meßrohr abgewandten Außenseite gegenüberliegen sowie
--- die Meßrohre zu entgegengesetzten Resonanzschwingungen in nur einer Schwingungsebene anregen, und
- mit jeweils zwei entlang von jedem Meßrohr versetzt angeordneten, einander an der jeweiligen vom anderen Meßrohr abgewandten Außenseite gegenüberliegenden elektrodynamischen Sensoren (29, 30, 31, 32) für deren Schwingungen,
bei welchem Verfahren
- das jeweilige Ende jeden Meßrohrs (23, 24) in die jeweilige Bohrung des Einlaß- bzw. des Auslaßverteilerstücks (19 bzw. 20) eingesteckt und
- mittels eines in das Ende eingebrachten Walzwerkzeugs (6) mit der Innenwand der Bohrung ohne Wärmezufuhr im jeweiligen Verteilerstück (3, 4) nur solange verpreßt wird,
-- bis die Meßrohre dynamisch optimal ausbalanciert sind,
-- wobei zur Ermittlung der optimalen dynamischen Balance auf dem äußeren Trägerrohr ein Beschleunigungssensor angeordnet wird und
-- das jeweilige Meßrohr und das jeweilige Verteilerstück solange miteinander verpreßt werden,
--- bis das Signal des Beschleunigungssensors ein Minimum aufweist.

## Claims

1. A Coriolis-type mass flow sensor (10)
- which can be installed in a conduit of a given diameter so as to be axially aligned with said conduit, which carries a fluid to be measured,
- with an inlet tube (11) and an outlet tube (12)
-- which serve to connect the mass flow sensor with the conduit,
- with an inlet manifold (19) and an outlet manifold (20),
- with an external support tube (14)
-- whose ends are fixed with their inside surfaces to the inlet manifold and the outlet manifold, respectively, and with their faces to the inlet tube and the outlet tube, respectively,
- with two parallel, straight measuring tubes (23, 24) of the same inside diameter and the same wall thickness each having its two ends fixed in parallel bores of the inlet manifold in alignment with the end of the inlet tube and in parallel bores of the outlet manifold in alignment with the end of the outlet tube, respectively,
- with two node plates (25, 26) interconnecting the two measuring tubes near the inlet manifold and the outlet manifold, respectively,
- with one vibration exciter (27, 28) per measuring tube
-- which vibration exciters are mounted
--- centrally with respect to the length of the measuring tube
--- opposite each other on the outer side of the measuring tube remote from the other measuring tube and
--- are so designed that they excite the measuring tubes into oppositely directed resonance vibrations in only one plane of vibration, and
- with a respective pair of spaced-apart electrodynamic sensors positioned along each of the measuring tubes for sensing the vibrations of the measuring tubes, the two pairs of electrodynamic sensors being located opposite each other.

2. A mass flow sensor as claimed in claim 1 wherein the respective vibration exciter is disposed centrally with respect to the length of the measuring tube (23, 24), on the outer side of the measuring tube remote from the other measuring tube, and on an exciter axis (37) lying in the plane of vibration.

3. A mass flow sensor as claimed in claim 1 wherein the respective sensors associated with one measuring tube are disposed at the same distance from the center of the measuring tube, on the outer side of the measuring tube remote from the other measuring tube, and on a respective sensor axis (38, 39) lying in the plane of vibration.

4. A mass flow sensor as claimed in claim 1 wherein the two vibration exciters and the four sensors comprise the following parts:
- a nonferromagnetic metal plate (51) soldered to the respective measuring tube and having a nonferromagnetic threaded connecting piece (52),
- a soft ferromagnetic metal cup (53) whose bottom rises on the inside at the center to form a threaded sleeve (54) into which the threaded connecting piece is screwed,
- a permanent-magnet disk (55) which is attached, preferably with an adhesive, to the end surface of the threaded sleeve and which is magnetized in the axial direction of the threaded sleeve, and
- a coil (57) mounted on the support tube by means of a coil holder (56) such that the permanent-magnet disk can move freely in the coil.

5. A mass flow sensor as claimed in claim 4 wherein the two vibration exciters and the four sensors preferably have the same respective dimensions.

6. A mass flow sensor as claimed in claim 1 wherein on the side of each node plate (25, 26) remote from the manifold, two flat projecting members (40, 41; 42, 43) per measuring tube are provided so as to lie in a plane which is perpendicular to the plane of vibration and contains the axis of the respective measuring tube.

7. A mass flow sensor as claimed in claim 1 or 6 wherein the two measuring tubes, the inlet manifold, the outlet manifold, the node plates, and, if present, the flat projecting members are made of titantium or a titanium alloy or zirconium, and wherein the inlet tube and the outlet tube are made of high-grade steel.

8. A mass flow sensor as claimed in claim 1 wherein the ends of at least one of the measuring tubes (23, 24) are press-bonded to the walls of the bores in the inlet manifold and outlet manifold (19, 20), respectively.

9. A method of manufacturing a Coriolis-type mass flow sensor (10)
- which can be installed in a conduit of a given diameter so as to be axially aligned with said conduit, which carries a fluid to be measured,
- with an inlet tube (11) and an outlet tube (12)
-- which serve to connect the mass flow sensor with the conduit,
- with an inlet manifold (19) and an outlet manifold (20),
- with an external support tube (14)
-- whose ends are fixed with their inside surfaces to the inlet manifold and the outlet manifold, respectively, and with their faces to the inlet tube and the outlet tube, respectively,
- with two parallel, straight measuring tubes (23, 24) of the same inside diameter and the same wall thickness each having its two ends fixed in parallel bores of the inlet manifold in alignment with the end of the inlet tube and parallel bores of the outlet manifold in alignment with the end of the outlet tube, respectively,
- with two node plates (25, 26) interconnecting the two measuring tubes near the inlet manifold and the outlet manifold, respectively,
- with one vibration exciter (27, 28) per measuring tube
-- which vibration exciters are mounted
--- centrally with respect to the length of the measuring tube
--- opposite each other on the outer side of the measuring tube remote from the other measuring tube and
--- are so designed that they excite the measuring tubes into oppositely directed resonance vibrations in only one plane of vibration, and
- with a respective pair of spaced-apart electrodynamic sensors positioned along each of the measuring tubes for sensing the vibrations of the measuring tubes, the two pairs of electrodynamic sensors being located opposite each other,
the method comprising the steps
- inserting the respective end of the each measuring tube (23, 24) into the associated bores of the inlet manifold and the outlet manifold (19, 20), respectively, and
- press-bonding the ends to the wall of the respective bore without heat supply using a rolling tool (6) which is inserted into the respective end
-- the press-bonding lasts only until the measuring tubes are dynamically optimally balanced in such a way that
-- for determining the optimal balance, an acceleration sensor is disposed on the external support tube and
-- the respective measuring tube and the respective manifold are press-bonded
--- until the signal of the acceleration sensor has a minimum.

## Revendications

1. Capteur de débit de masse (10) selon le principe de Coriolis,
- pouvant être monté aligné sur l'axe d'une tuyauterie d'un diamètre donné, traversée par un fluide à mesurer,
- comprenant un tube d'entrée (11) et un tube de sortie (12),
-- servant à la liaison avec la tuyauterie,
- comprenant une pièce de distribution d'entrée (19) et une pièce de distribution de sortie (20),
- comprenant un tube de support extérieur (14),
-- dont les extrémités respectives sont fixées côté intérieur de paroi sur la pièce de distribution d'entrée ou sur la pièce de distribution de sortie et côté avant sur le tube d'entrée ou le tube de sortie,
- comprenant deux tubes gradués parallèles droits (23,24) d'un même diamètre intérieur et de la même épaisseur de paroi, fixés respectivement aux deux extrémités dans des perçages parallèles de la pièce de distribution d'entrée ou dans des perçages parallèles de la pièce de distribution de sortie, et dont les extrémités affleurent la pièce de distribution d'entrée ou la pièce de distribution de sortie,
- comprenant respectivement une plaque de jonction (25, 26) reliant uniquement les deux tubes gradués l'un à l'autre à proximité de la pièce de distribution d'entrée ou de la pièce de distribution de sortie,
- comprenant respectivement un générateur d'oscillations (27, 28) par tube gradué,
-- lesquels générateurs d'oscillations
--- sont disposés au centre par rapport à la longueur respective des tubes gradués,
--- se font face sur la face extérieure respective opposée à l'autre tube gradué, et sont prévus
--- pour appliquer aux tubes gradués des oscillations de résonance opposées sur un seul plan d'oscillation, et
- comprenant respectivement deux détecteurs électrodynamiques (29, 30, 31, 32) disposés de façon décalée le long de chaque tube gradué et se faisant face sur la face extérieure respective opposée à l'autre tube gradué, pour les oscillations de ceux-ci.

2. Capteur de débit de masse selon la revendication 1, où le générateur d'oscillations respectif est disposé au centre par rapport à la longueur des tubes gradués (23, 24) et sur leur face extérieure opposée à l'autre tube gradué sur un axe d'excitation (37) s'étendant sur le plan d'oscillation.

3. Capteur de débit de masse selon la revendication 1, où les détecteurs respectivement associés à un tube gradué sont disposés à la même distance par rapport au centre du tube et sur sa face extérieure opposée à l'autre tube gradué sur respectivement un axe de détecteur (38, 39) s'étendant sur le plan d'oscillation.

4. Capteur de débit de masse selon la revendication 1, où les deux générateurs d'oscillations et les quatre détecteurs comprennent les éléments suivants :
- une plaque métallique (51) non ferromagnétique soudée au tube gradué respectif pourvue d'un raccord fileté (52) du même matériau,
- un gobelet métallique ferromagnétique tendre (53) dont le fond passe au milieu de la face intérieure dans une douille filetée (54) dans laquelle le raccord fileté est vissé,
- un disque à aimant permanent (55) magnétisé dans le sens de l'axe de la douille filetée et fixé ou collé sur la face d'extrémité de la douille fileté, et
- une bobine (57) fixée sur le tube de support à l'aide d'un support de bobine (56) de telle sorte que le disque à aimant permanent puisse se déplacer librement dans la bobine.

5. Capteur de débit de masse selon la revendication 4, où les deux générateurs d'oscillations et les quatre détecteurs présentent respectivement les mêmes dimensions.

6. Capteur de débit de masse selon la revendication 1, où sur la face opposée à la pièce de distribution de chaque plaque de jonction (25, 26) deux entretoises plates (40, ; 42, 43) par tube gradué sont installées de telle sorte qu'elles se situent sur un plan vertical par rapport au plan d'oscillation comprenant l'axe du tube gradué respectif.

7. Capteur de débit de masse selon la revendication 1 ou 6, où les deux tubes gradués, la pièce de distribution d'entrée, la pièce de distribution de sortie, les plaques de jonction ainsi que le cas échéant les entretoises sont en titane ou en un alliage de titane ou en zirconium, et où le tube d'entrée et le tube de sortie sont en acier spécial.

8. Capteur de débit de masse selon la revendication 1, où l'extrémité respective d'au moins l'un des tubes gradués (23, 24) est comprimée dans le perçage respectif de la pièce de distribution d'entrée ou de sortie (19,20) sur la paroi intérieure du perçage.

9. Procédé de fabrication d'un capteur de débit de masse (10) travaillant selon le principe de Coriolis,
- pouvant être monté aligné sur l'axe d'une tuyauterie d'un diamètre donné traversée par un fluide à mesurer,
- comprenant un tube d'entrée (11) et un tube de sortie (12),
-- servant à la liaison avec la tuyauterie,
- comprenant une pièce de distribution d'entrée (19) et une pièce de distribution de sortie (20),
- comprenant un tube de support extérieur (14),
-- dont les extrémités respectives sont fixées côté intérieur de paroi sur la pièce de distribution d'entrée ou sur la pièce de distribution de sortie et côté avant sur le tube d'entrée ou le tube de sortie,
- comprenant deux tubes gradués parallèles droits (23,24) d'un même diamètre intérieur et de la même épaisseur de paroi, comprimés respectivement aux deux extrémités dans des perçages parallèles de la pièce de distribution d'entrée ou dans des perçages parallèles de la pièce de distribution de sortie, et dont les extrémités affleurent la pièce de distribution d'entrée ou la pièce de distribution de sortie,
- comprenant respectivement une plaque de jonction (25, 26) reliant uniquement les deux tubes gradués l'un à l'autre à proximité de la pièce de distribution d'entrée ou de la pièce de distribution de sortie,
- comprenant respectivement un générateur d'oscillations (27, 28) par tube gradué,
-- lesquels générateurs d'oscillations
--- sont disposés au centre par rapport à la longueur respective des tubes gradués,
--- se font face sur la face extérieure respective opposée à l'autre tube gradué, et
--- appliquent aux tubes gradués des oscillations de résonance opposées sur un seul plan d'oscillation, et
- comprenant respectivement deux détecteurs électrodynamiques (29, 30, 31, 32) disposés de façon décalée le long de chaque tube gradué et se faisant face sur la face extérieure respective opposée à l'autre tube gradué, pour les oscillations de ceux-ci
où dans lequel procédé
- l'extrémité respective de chaque tube gradué (23, 24) est introduite dans le perçage respectif de la pièce de distribution d'entrée ou de sortie (19 ou 20), et
- comprimée dans la pièce de distribution (3, 4) respective avec la paroi intérieure du perçage à l'aide d'un outil de laminage (6) introduit dans l'extrémité et sans apport de chaleur,
-- jusqu'à ce que les tubes gradués présentent un équilibrage dynamique optimum,
-- où pour déterminer l'équilibrage dynamique optimum un détecteur d'accélération est placé sur le tube de support extérieur, et
-- où le tube gradué respectif et la pièce de distribution respective sont comprimés l'un avec l'autre,
--- jusqu'à ce que le signal du détecteur d'accélération présente un minimum.
